# EUROPEAN PATENT APPLICATION

(11) **EP 1 734 474 A1**
(43) Date of publication of application: **20.12.2006**
(21) Application number: 06115531.3
(22) Date of filing: 15.06.2006
(51) Int. Cl.: G06Q 40/00

(54) **Systems and methods for preventing server and network overload**

(30) Priority: 15.06.2005 US 153210
(71) Applicant: Cinnober Financial Technology AB, 112 46 Stockholm (SE)
(72) Inventor: Almström, Mats, 113 44, Stockholm (SE)
(74) Representative: Pierrou, Mattias

(57) **Abstract**

The present invention relates to methods, a system, computer readable mediums and computer program products for controlling a flow of incoming quote transactions from clients (12a, 12b, 12c) to an electronic trading system (10) communicating with the clients (12a, 12b, 12c), the system (10) comprising at least one receiving server (14) adapted to receive the flow of incoming quote transactions from the clients (12a, 12b, 12c) and at least one processing unit (16) adapted to process the incoming transactions. The method comprises the steps of: receiving (30) a quote transaction from a user of a client (12a, 12b, 12c); calculating (32) a period of time elapsed since the last transaction was received from the user; calculating (34) an available quote space for the user using the elapsed period of time and unused quote space previously collected; determining (36) whether the transaction should be allowed based on the available quote space; and if it is determined that the transaction not should be allowed, delaying (40) the transaction until there is available quote space for the user.

## Description

### TECHNICAL AREA

The present invention relates to electronic trading systems for trading stocks, bonds, futures, options and other financial instruments as well as betting and e-gaming, and in particular to methods, systems, computer readable mediums and computer program products for such systems.

### BACKGROUND OF THE INVENTION

During the last decade, almost all the world's exchanges and marketplaces have introduced electronic trading systems. These systems either replace the traditional trading floors or are used as complements to them. Today a large number of exchanges throughout the world utilize electronic trading to trade stocks, bonds, futures, options and other financial instruments. These electronic exchanges generally include three basic components, namely server computers (host), communication servers, and the exchanges participants' computers (client). The host constitutes, so to speak, the heart of the electronic trading system. The hosts operations includes, for example, order-matching, maintaining order books and positions or price information. Participants, e.g. traders, are capable of communicating with the host by means of high speed data lines, high speed communications servers and the Internet. Thus, the traders can participate in the market by means of the clients communicating with the host.

Normally, a large number of clients are connected to a trading system, each generating a large number of transactions every minute and second. Each transaction may in fact comprise a plurality of quotes of a traded commodity, for example, options since individual quotes are bundled together in a transaction when sent to the trading system. Accordingly, the trading system must be capable of handling a huge number of transactions during a day. It may be as much as 100 millions of quotes per day. In order to prevent overload of the trading system, the different networks of the trading system, the different servers of the trading system, etc., the incoming quote flow must be monitored and if necessary limited on a user level. This monitoring and limiting is often performed in a receiving server adapted to receive the incoming quote flow. Today, this flow monitoring and limiting is executed in accordance with the description following hereinafter.

Each user is designated a quoting rate defining the allowed rate of quotes for the specific user. The receiving server continuously monitors the quote flow of each user connected to the server. When a user attempts to exceed the allowed quote rate, i.e. sends a transaction containing a number of transaction exceeding the designated quote rating for the specific user, the server delays the transaction before sending it to the processing unit comprising, inter alia, the business logic of the trading system in order to keep the average quote rate from that user below the designated limit. A transaction containing a large number of quotes may hence be held back a significantly long period of time, sometimes up to several seconds. This means that the response time of a mass-quote request can be very long in case it exceeds the defined quote rate. Consequently, a user emitting requests with quotes in a rather even pace thus resulting in transactions containing only a few quotes will, in principle, never be subjected to delays. On the other hand, a user emitting large requests in an irregular pace, i.e. the requests come in bursts, resulting in transactions exceeding the defined quote rate will unnecessarily be subjected to delays. Due to the behaviour of the financial markets, quote request will in most cases be of burst type.

Thus, there is need of an improved control system and a method for controlling the incoming flow of transaction to an electronic trading system.

### SUMMARY OF THE INVENTION

An object of the present invention is to provide an improved control system and a method for controlling the incoming flow of transactions to an electronic trading system for trading stocks, bonds, futures, options and other financial instruments as well as betting and e-gaming.

This and other objects are achieved according to the present invention by providing a control system, a method, a computer program, and a computer readable medium having the features defined in the independent claims. Preferred embodiments are defined in the dependent claims.

According to a first aspect of the present invention, there is provided a method for controlling a flow of incoming quote transactions from clients to an electronic trading system communicating with the clients, the system comprising at least one receiving server adapted to receive the flow of incoming quote transactions from the clients and at least one processing unit comprising, inter alia, the business logic adapted to process the incoming transactions. The method comprises the steps of: receiving a quote transaction from a user of a client; calculating a period of time elapsed since the last transaction was received from the user; calculating an available quote space for the user using the elapsed period of time and unused quote space previously collected; determining whether the transaction should be allowed based on the available quote space; and if it is determined that the transaction should not be allowed, delaying the transaction until there is available quote space for the transaction.

According to a second aspect of the present invention, there is provided a control system at a receiving server of a trading system for controlling a flow of incoming quote transactions from clients to the electronic trading system communicating with the clients, the trading system further comprising at least one processing unit adapted to process the incoming transactions. The control system comprises a quote flow controlling means adapted to, at receipt of a quote transaction from a user of a client at the server, calculate a period of time elapsed since the last transaction was received from the user using a transaction history for the user stored in a storing means; calculate an available quote space for the user using the elapsed period of time and unused quote space previously collected; determine whether the transaction should be allowed based on the available quote space; and if it is determined that the transaction not should be allowed, delay the transaction until there is available quote space for the transaction.

According to a third aspect of the present invention, there is provided a computer program product, which when executed on a computer, performs steps in accordance with the method of the first aspect.

According to a further aspect of the present invention, there is provided a computer readable medium comprising instructions for bringing a computer to perform steps of the method according to the first aspect.

Thus, the invention is based on the idea of "smoothing" out the allowed quote rate of a user over a time period. Each user is allowed, so to speak, "collect" unexploited quotes back in time, at the most a configurable period of time. Consequently, each user will, at each given moment, have a quote space, which corresponds to this "collected" quotes over time. This provides several advantages in comparison with the known technique. One advantage is that an efficient flow control of incoming transactions can be achieved, which, for example, reduces the risks for overload of the trading system. Moreover, a user emitting requests in an irregular pace, i.e. the requests come in bursts, will not encounter unnecessary delays provided that the size of the incoming transaction not exceeds the available quote space. Thus, the present invention limits the quote flow of different user in a more fair way than the known technique, where a user emitting requests with quotes in a rather even pace thus resulting in transactions containing only a few quotes will, in principle, never be subjected to delays. On the other hand, a user emitting requests in an irregular pace, i.e. the requests come in bursts, resulting in transactions exceeding the defined quote rate will unnecessarily be subjected to delays. Furthermore, the present invention discloses a more fair and effective method and control system than the known technique in a computational sense of meaning.

As realized by the person skilled in the art, the methods of the present invention, as well as preferred embodiments thereof, are suitable to realize as a computer program or a computer readable medium.

The features that characterize the invention, both as to organization and to method of operation, together with further objects and advantages thereof, will be better understood from the following description used in conjunction with the accompanying drawings. It is to be expressely understood that the drawings is for the purpose of illustration and description and is not intended as a definition of the limits of the invention. These and other objects attained, and advantages offered, by the present invention will become more fully apparent as the description that now follows is read in conjunction with the accompanying drawings.

### SHORT DESCRIPTION OF THE DRAWINGS

In the following description of an embodiment of the invention, reference will be made to the accompanying drawings of which:
- Fig. 1: is a schematic block diagram of an electronic trading system in accordance with the present invention.
- Fig. 2: shows schematically the general principles of the method for an electronic trading system according to the present invention.
- Fig. 3: shows schematically the principles for calculating available quote space for a user according to one embodiment of the present invention.
- Fig. 4: shows schematically the principles for monitoring available quote space for a user according to one embodiment of the present invention.
- Fig. 5: is a diagram illustrating how quote space is built up over time and decreases by each transaction.

### DETAILED DESCRIPTION OF THE INVENTION

In the following there will be discussed preferred embodiments of the methods and control system for controlling the incoming flow of transaction to an electronic trading system.

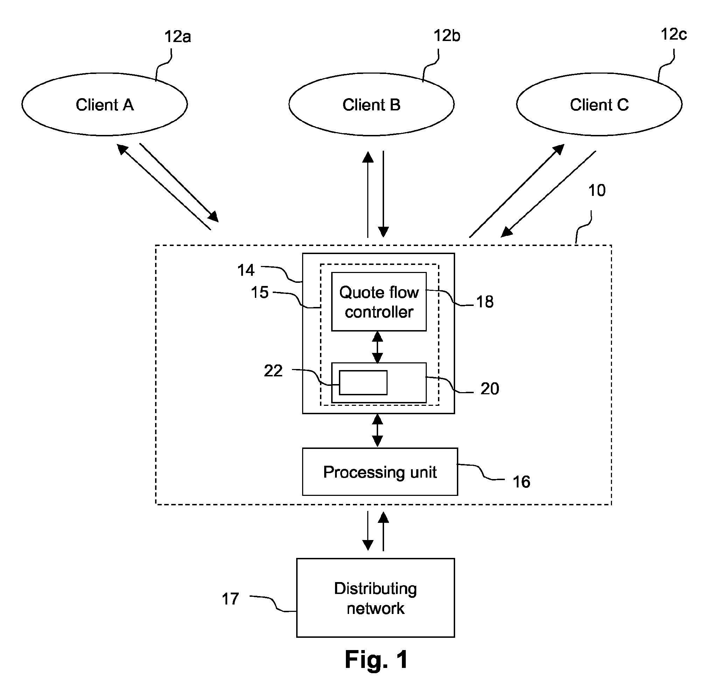

With reference first to Fig. 1, an electronic trading system in which the present invention can be implemented will be discussed. A number of clients, here indicated by client A 12a, client B 12b, and client C 12c, communicates with the trading or exchange system 10. Thus, traders can participate in the market by means of the clients 12a-12c communicating with the exchange system 10, i.e. the host. The clients 12a-12c may link to the system 10 via high speed data lines, high speed communication servers, or the Internet. High speed data lines establish direct connection between a client and the system. Connection can also be established between the client and the system by configuring high speed networks or communication servers at strategic access points in locations where traders physically are located. Internet is a third communication means enabling traders, using, for example, the clients 12a-12c, to communicate using, for example, high speed data lines connected to the Internet. Hence, traders are allowed to be located anywhere they can establish a connection to the Internet.

The system 10 comprises a receiving server 14 arranged to receive incoming messages, for example, in form a quote transactions from the clients 12a-12c and distribute them to a processing unit 16. In order to secure system availability, the processing unit 16 in fact often comprises two servers placed in two geographically different spots interconnected via a network. One of the servers is considered being the primary server and the other consequently as the secondary. The system will be operational with only one server acting as primary, but will then, of course, not be redundant. The primary server accepts incoming messages from transferred from the gateway, stores them in a storage means in a log file. This storage means may of course be physically separated from the system 10. Furthermore, the primary server replicates the messages to a secondary node or server, which, in turn, stores in a storage means in a log file, which storage means may be of course be physically separated from the system 10. The two servers of the processing unit perform the same processing procedure based on the incoming message. This results in the two servers being synchronized and having the same application state. After being processed in the processing unit 16, the transactions are transferred to a distributing network 17.

The receiving server 14 comprises a control system 15 adapted to control the flow of incoming quote transactions from the different clients 12a, 12b, 12c. More specifically, the control system 15 includes a quote flow controlling means 18 adapted to, at receipt of a quote transaction from a user of a client 12a, 12b, 12c, calculate a period of time elapsed since the last transaction was received from that user using a transaction history for the specific user, for example, stored in a storing means 20 of the control system 15. However, as the skilled man realizes, the storing means can be arranged external from the control system 15. The storing means 20 may include a random access memory (RAM) and/or a non-volatile memory such as read-only memory (ROM). In this embodiment, the storing means 20 comprises a computer program 22 comprising instructions for bringing a computer device or a processing means, such as the quote flow controlling means 18, to execute method steps in accordance with the present invention. As will be appreciated by one of ordinary skill in the art, storing means 20 may include various types of physical devices for temporary and/or persistent storage of data which includes solid state, magnetic, optical and combination devices. For example, the storing means may be implemented using one or more physical devices such as DRAM, PROMS, EPROMS, EEPROMS, flash memory, and the like.

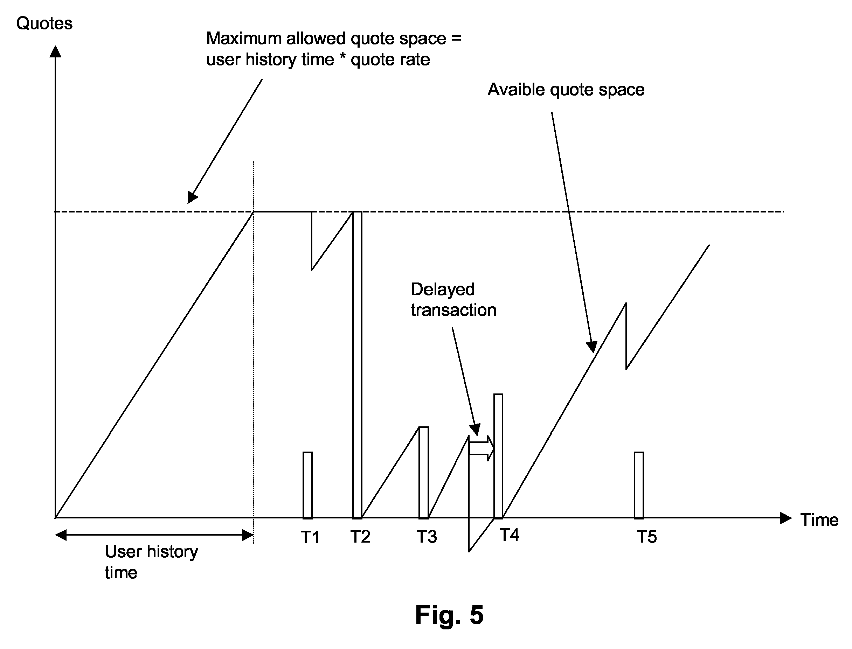

Furthermore, the quote flow controlling means 18 is adapted to calculate an available quote space for the specific user using the calculated elapsed period of time, to determine whether the received transaction should be allowed based on the calculated available quote space, and to, if it is determined that the transaction not should be allowed, delay the transaction until there is available quote space for the transaction, see Fig. 5 where it is illustrated how quote space is build up over time and decreases by each transaction.

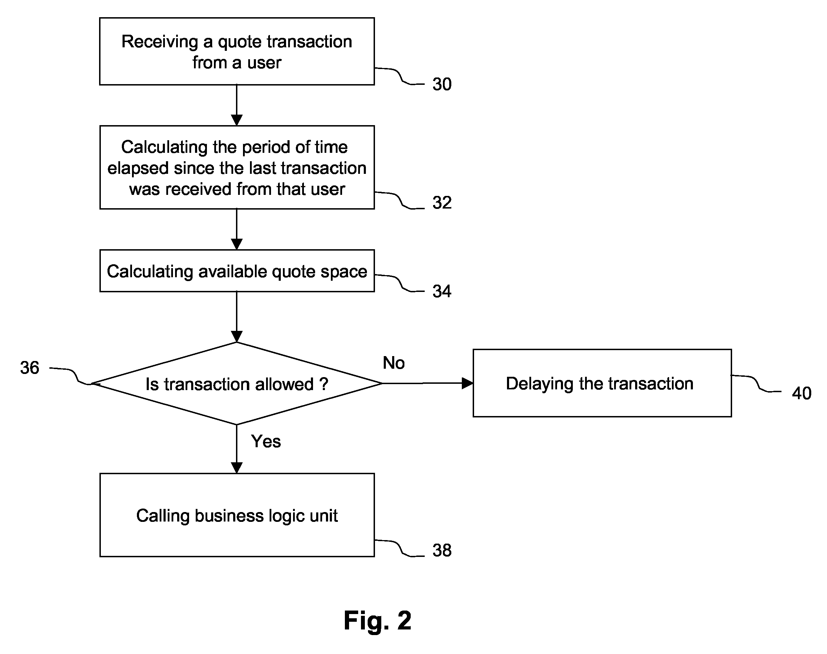

According to one embodiment, the quote flow controlling means 18 is adapted to obtain the user's allowed quote rate from the storing means 20. This allowed quote rate for a user is configurable. Moreover, the quote flow controlling means 18 is adapted to determine a present maximum quote space by multiplying the quote rate of the user with the calculated period of time elapsed since last transaction, and to determine available quote space by decreasing the present maximum quote space with the size of the received quote transaction. Further details and aspects of the quote flow controlling means will be described in detail hereinafter with reference to Fig. 2-4.

Turning now to Fig. 2, the general principles of the method for flow control of an electronic trading system according to the present invention will now be discussed with reference to Fig. 2. First, at step 30, a quote transaction from a user of a client 12a, 12b, 12c is received at the receiving server 14. Then, at step 32, a period of time elapsed since the last transaction was received from the user is calculated in the quote flow controlling means 18 as described above. Thereafter, at step 34, an available quote space for the user using the elapsed period of time and unused quote space previously collected is calculated.

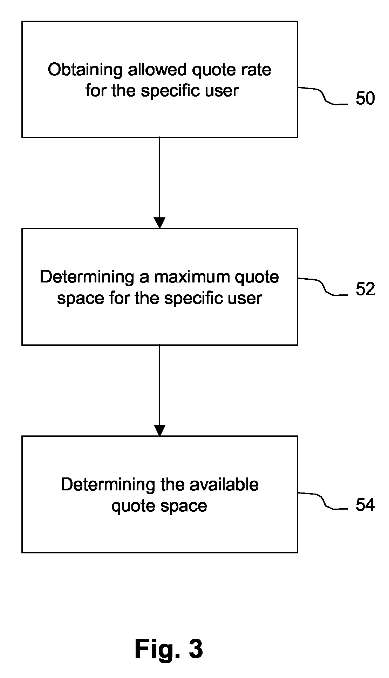

With reference to Fig. 3, the procedure for calculating the available quote space according to one embodiment of the present invention will be discussed. First, at step 50, the user's allowed quote rate is obtained from the storing means 20. Thereafter, at step 52, the present maximum quote space is determined by multiplying the allowed quote rate of that user with the period of time elapsed since last transaction added to unused quote space previously collected. Finally, at step 54, the available quote space is determined by decreasing the present maximum quote space with the size of the received quote transaction.

Returning now to Fig. 2, after the available quote space for the has been calculated, the procedure proceeds to step 36 where it is determined whether the transaction should be allowed or not based on the available quote space.

According to one embodiment of the present invention, it is checked whether the available quote space is above a predetermined level, preferably above zero. If the quote space is above the level, the receiving server 14 calls the processing at step 38 and the transaction will not be subjected to a delay and if the available quote space is below the level procedure proceeds to step 40 and the transaction is delayed until there is enough quote space for the transaction. That is, if the available quote space is positive, there is enough available quote space for the transaction and, on the other hand, if the available quote space is negative there is not enough quote space for the transaction and the transaction is delayed until there is enough space.

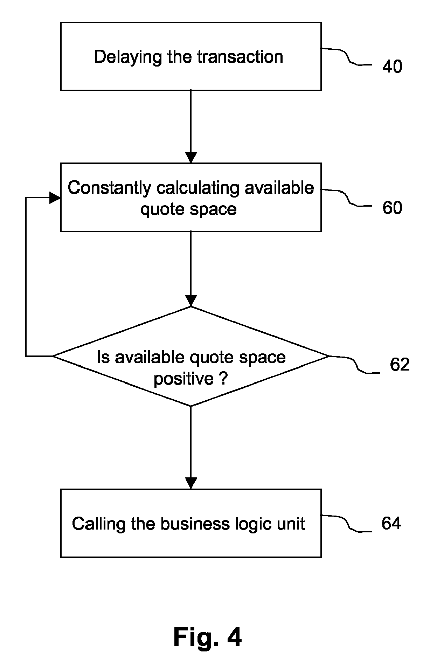

When a transaction has been delayed, the following procedure is executed, which in the following will be described with reference to Fig. 4. Initially, at step 40, the transaction is delayed due to the fact that the available quote space was negative. Then, at step 60, the available quote space is calculated substantially continuously in accordance with the procedure described with reference to Fig. 3. Subsequently, at step 62, it is monitored, substantially continuously, whether the available quote space has increased above the predetermined level, i.e. whether the available quote space has become positive. It is determined that the available quote space is above the predetermined level, the procedure proceeds to step 64 where the processing 16 is called upon. On the other hand, it is determined that the available quote space still is negative, the procedure returns to step 62.

Referring now to Fig. 5, an illustrative example describing how quote space is built up over time and decreases by each transaction will be discussed. Number of quotes is indicated by the vertical axis and time by the horizontal. As can be seen, the maximum quote space, indicated by the dashed line, is determined by the user history time, which is configurable (a preferred value may be 10 seconds), multiplied with the quote rate of the user, which also is configurable. Thus, if the user history time is 10 seconds and the rate is 50 quotes per second, the maximum available quote space is 500. T1-T5 indicate received transactions. T1, T2, T3 and T5 can be processed without delay since there is enough quote space available, the available quote space is indicated with an unbroken line, while the available quote space is not enough for transaction T4. Therefore, T4 is delayed until the available quote space has increased to be positive.

An operator of a computer apparatus of a trading system, for example, the system shown in Fig. 1, is able to monitor whether users exceed their quote rates in real-time via a configuration GUI client. The operator able to set properties in real-time for each user, for example, quote rate of a user by using an input device, such as a pointing device, e.g. a mouse, or a keyboard.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the present invention could be implemented in a wide variety of embodiments, including hardware and software implementations, or combinations thereof. This application is intended to cover any adaptations or variations of the preferred embodiments discussed herein. Consequently, the present invention is defined by the wording of the appended claims and equivalents thereof.

## Claims

1. A method for controlling a flow of incoming quote transactions from clients (12a, 12b, 12c) to an electronic trading system (10) communicating with said clients (12a, 12b, 12c), said system (10) comprising at least one receiving server (14) adapted to receive said flow of incoming quote transactions from said clients (12a, 12b, 12c) and at least one processing unit (16) adapted to process said incoming transactions, **characterized by** the steps of:
receiving (30) a quote transaction from a user of a client (12a, 12b, 12c);
calculating (32) a period of time elapsed since the last transaction was received from said user;
calculating (34) an available quote space for said user using said elapsed period of time and unused quote space previously collected;
determining (36) whether said transaction should be allowed based on said available quote space; and
if it is determined that said transaction not should be allowed, delaying (40) said transaction until there is available quote space for said transaction, or, if it is determined that said transaction should be allowed, calling (38) said processing unit (16).

2. The method according to claim 1, wherein the step of calculating an available quote space comprises the steps of:
obtaining (50) said user's allowed quote rate;
determining (52) a present maximum quote space by multiplying said quote rate of said user with said period of time elapsed since last transaction added to unused quote space previously collected; and
determining (54) available quote space by decreasing said present maximum quote space with the size of received quote transaction.

3. The method according to claim 2, wherein the steps of determining whether said transaction should be allowed comprises the step of:
checking (60, 62) whether said available quote space is above a predetermined level; and
if it is determined that said quote space is above said level, determining (64) that said transaction should be allowed.

4. The method according to claim 3, further comprising the steps of:
if it is determined that said quote space is below said level, determining that said transaction not should be allowed.

5. The method according to claim 4, further comprising the step of:
if it is determined that said transaction should be allowed, transferring said transaction without delay to said processing unit (16).

6. The method according to claim 3, wherein the step of delaying said transaction a predetermined period of time comprises the steps of:
substantially continuously calculating (60) said available quote space;
substantially continuously monitoring (62) whether said available quote space is above said predetermined level; and
if it is determined that said available quote space is above said predetermined level, transferring (64) said transaction to said processing unit (16).

7. The method according to claim 6, wherein said predetermined level is zero.

8. The method according to claim 1, further comprising the step of:
determining a user history time, said user history time being configurable.

9. The method according to claim 8, further comprising the steps of:
checking whether said period of time since the last transaction of said user was received exceeds said user history time; and
if said period of time since the last transaction of said user was received exceeds said user history time, using said user history time when determining available quote space.

10. The method according to claim 1, wherein said quote rate of said user is configurable.

11. A control system (15) at a receiving server (16) of a trading system (10) for controlling a flow of incoming quote transactions from clients (12a, 12b, 12c) to said electronic trading system (10) communicating with said clients (12a, 12b, 12c), said trading system (10) further comprising at least one processing unit (16) adapted to process said incoming transactions, **characterized in that** said control system (15) comprises a quote flow controlling means (18) adapted to
at receipt of a quote transaction from a user of a client (12a, 12b, 12c) at said server (16), calculate a period of time elapsed since the last transaction was received from said user;
calculate an available quote space for said user using said elapsed period of time and unused quote space previously collected;
determine whether said transaction should be allowed based on said available quote space; and
if it is determined that said transaction not should be allowed, delay said transaction until there is available quote space for said transaction, or, if it is determined that said transaction should be allowed, call said processing (16).

12. The system according to claim 11, wherein said quote flow controlling means (18) further is adapted to
obtain said user's allowed quote rate from a storing means (20);
determine a present maximum quote space by multiplying said quote rate of said user with said period of time elapsed since last transaction added to unused quote space previously collected; and
determine available quote space by decreasing said present maximum quote space with size of received quote transaction.

13. The system according to claim 12, wherein said quote flow controlling means (18) further is adapted to:
check whether said available quote space is above a predetermined level; and
if it is determined that said quote space is above said level, determine that said transaction should be allowed.

14. The system according to claim 13, wherein said quote flow controlling means (18) further is adapted to:
if it is determined that said quote space is below said level, determine that said transaction not should be allowed.

15. The system according to claim 14, wherein said quote flow controlling means (18) further is adapted to:
if it is determined that said transaction should be allowed, call said processing unit (16) without delay.

16. The system according to claim 13, wherein said quote flow controlling means (18) further is adapted to:
substantially continuously calculate said available quote space;
substantially continuously monitor whether said available quote space has increased above said predetermined level; and
if it is determined that said available quote space has increased above said predetermined level, call said processing unit (16).

17. The system according to claim 16, wherein said predetermined level is zero.

18. The system according to claim 10, wherein said storing means (20) is adapted to store a user history time, said user history time being configurable.

19. The system according to claim 18, wherein said quote flow controlling means (18) further is adapted to:
check whether said period of time since the last transaction of said user was received exceeds said user history time; and
if said period of time since the last transaction of said user was received exceeds said user history time, use said user history time when determining available quote space.

20. The system according to claim 10, wherein said quote rate of said user is configurable.

21. A computer program product, which when executed on a computer, performs steps in accordance with any one of the preceding claims 1-10.

22. A computer readable medium comprising instructions for bringing a computer to perform the method according to any one of the preceding claims 1-10.
